# EUROPÄISCHE PATENTSCHRIFT

(11) **EP 2 356 352 B1**
(45) Veröffentlichungstag und Bekanntmachung des Hinweises auf die Patenterteilung: **03.10.2012**
(21) Anmeldenummer: 09784021.9
(22) Anmeldetag: 15.10.2009
(51) Int. Cl.: F16H 37/04

(54) **AUTOMATISIERTES MEHRGRUPPENGETRIEBE EINES KRAFTFAHRZEUGES UND VERFAHREN ZUM BETRIEB EINES AUTOMATISIERTEN MEHRGRUPPENGETRIEBES**
AUTOMATED MULTI-GROUP TRANSMISSION OF A MOTOR VEHICLE AND METHOD FOR OPERATING AN AUTOMATED MULTI-GROUP TRANSMISSION
BOÎTE DE VITESSES AUTOMATISÉE MULTIGROUPE POUR VÉHICULE À MOTEUR ET PROCÉDÉ DE FONCTIONNEMENT D'UNE BOÎTE DE VITESSES AUTOMATISÉE MULTIGROUPE

(30) Priorität: 10.12.2008 DE 102008054477
(43) Veröffentlichungstag der Anmeldung: 17.08.2011
(73) Patentinhaber: ZF Friedrichshafen AG, 88038 Friedrichshafen (DE)
(72) Erfinder: HOFFMANN, Rayk, 88048 Friedrichshafen (DE)
(86) Internationale Anmeldenummer: PCT/EP2009/063452
(87) Internationale Veröffentlichungsnummer: WO 2010/066489

(56) Entgegenhaltungen:
- WO-A-95/27158
- WO-A-2007/115687
- DE-B- 1 249 708

## Beschreibung

Die Erfindung betrifft ein automatisiertes Mehrgruppengetriebe eines Kraftfahrzeuges und ein Verfahren zum Betrieb eines solchen Mehrgruppengetriebes gemäß dem Oberbegriff de Patentanspruchs 1 beziehungsweise dem Oberbegriff des Patentanspruchs 6.

Mehrgruppengetriebe bestehen aus zwei oder mehr meist seriell angeordneten Getrieben, durch deren Kombination eine hohe Gangzahl realisierbar ist. Zunehmend werden sie als automatisierte Schaltgetriebe, beispielsweise bestehend aus einer Eingangsgruppe, einer Hauptgruppe und einer Nachschaltgruppe, konzipiert. Derartige Getriebe finden insbesondere in Nutzkraftfahrzeugen Anwendung, da sie eine große Ganganzahl mit einer feinen Gangabstufung ermöglichen und einen hohen Wirkungsgrad aufweisen. Zudem zeichnen sie sich im Vergleich zu manuellen Schaltgetrieben durch einen hohen Bedienungskomfort ohne die Gefahr von Bedienungsfehlem aus, und sie sind im Vergleich zu konventionellen Automatgetrieben besonders wirtschaftlich in den Herstellungs- und Betriebskosten.

Bauartbedingt unterliegen herkömmliche Mehrgruppen-Schaltgetriebe, wie alle nicht unter Last schaltenden manuellen oder automatisierten Schaltgetriebe, einer Zugkraftunterbrechung beim Gangwechsel, da stets der Kraftfluss vom Antriebsmotor durch Öffnen einer Kopplung unterbrochen wird, um den eingelegten Gang lastfrei auszulegen, mittels Motorsteuerung, Getriebebremse und/oder Synchronisierungen in einer Neutralstellung Getriebe und Antriebsmotor auf eine Anschlussdrehzahl eines angewählten oder vorgegebenen Zielganges zu synchronisieren und den Zielgang einzulegen. Durch die Zugkraftunterbrechung entstehen Einschränkungen bezüglich der Fahrleistung aufgrund eines Geschwindigkeitsverlustes sowie gegebenenfalls ein erhöhter Kraftstoffverbrauch. Während sich Zugkraftunterbrechungen bei Personenkraftwagen durch Einbußen in der Fahrdynamik in der Regel eher nur störend auswirken, beispielsweise bei einer sportlich orientierten Fahrweise, kann sich bei schweren Nutzfahrzeugen an Steigungen die Fahrgeschwindigkeit derart verzögem, dass ein Hochschalten unmöglich wird und es zu unerwünschten Rückschaltvorgängen, Kriechfahrten oder sogar zu zusätzlichen Anfahrvorgängen kommt.

Die Auslegung der Stufensprünge des Getriebes wird grundsätzlich vom maximalen Drehmoment des Verbrennungsmotors und der Anzahl der Übersetzungsstufen bestimmt. Für die Fahrbarkeit des Fahrzeuges in den einzelnen Gangstufen und die Schalthäufigkeit ist jedoch das Leistungsgewicht des Fahrzeuges maßgebend. Demnach werden die Betriebspunkte des Verbrennungsmotors für ein bestimmtes Fahrzeug-Gesamtgewicht festgelegt. Da Nutzfahrzeuge im Fernverkehr häufig jedoch nicht voll ausgelastet sind, also nur teilbeladen oder unbeladen sind, oder über weite Strecken sehr ebene Routen befahren, wird der Verbrennungsmotor oft mit einem deutlichen Leistungsüber schuss betrieben, weicher der Festlegung des Betriebspunktes für ein bestimmtes Fahrzeug-Gesamtgewicht geschuldet ist. Dies wiederum erhöht unnötig den Kraftstoffverbrauch.

Eine Reduzierung von derartigen unerwünschten Leistungsüberschüssen ist über eine Getriebeauslegung mit einer vergleichsweise sehr schnellen Hinterachsübersetzung möglich. In der Praxis hat sich jedoch herausgestellt, dass bei einem derartig konzipierten Getriebe eine signifikant höhere Schalthäufigkeit entsteht. Dies kann aufgrund der damit verbundenen häufigen Zugkraftunterbrechungen für den Fahrer als sehr unkomfortabel erscheinen. Bei einem Fahrbetrieb mit einem voll beladenem Fahrzeug, bei dem der Schnellgang (Overdrive) eher nicht verwendet wird und eine Getriebeabstufung mit einer vergleichsweise sehr schnellen Hinterachsübersetzung dann eher ungünstig erscheint, können die entstehenden Zugkraftunterbrechungen sogar als unakzeptabel empfunden werden.

Die Anmelderin hat bereits eine Reihe von Lösungen für automatisierte Mehrgruppengetriebe vorgeschlagen, die derartige Zugkraftunterbrechungen reduzieren oder ganz vermeiden können. Insbesondere seien die DE 10 2006 024 370 A1, DE 10 2005 046 894 A1 und die nicht vorveröflentlichte DE 10 2008 001 200 genannt. Die Zugkraftunterstützung beruht dabei im Wesentlichen darauf, dass die Bauweise eines Gruppengetriebes die Schaltung eines Direktganges als ein Zwischengang während eines Gangwechsels ermöglicht. Dazu wird über eine Lastschaltkupplung temporär eine Direktverbindung einer Eingangswelle mit einer Abtriebswelle hergestellt, wodurch ein klauengeschaltetes Hauptgetriebe lastfrei wird, so dass bei geschlossener Anfahrkupplung der eingelegte Ursprungsgang lastfrei ausgelegt, das Getriebe synchronisiert und ein Zielgang eingelegt werden kann. Die Lastschaftkupplung überträgt dabei ein Motormoment auf den Getriebeausgang, wobei ein freiwerdendes dynamisches Moment bei einer Drehzahlabsenkung zwischen Ursprungsgang und Zielgang genutzt wird, um den Zugkrafteinbruch weitgehend zu kompensieren.

Die Lastschaltkupplung kann beispielsweise, wie die DE 10 2006 024 370 A1 zeigt, zwischen einem zweigängigen Eingangsgetriebe und einem dreigängigen Hauptgetriebe oder zwischen einer Anfahrkupplung und dem Eingangsgetriebe angeordnet sein. In der DE 10 2005 046 894 A1 ist eine Lastschalfkupplung innerhalb eines, einem Hauptgetriebe nachgeschalteten, Bereichsgetriebes angeordnet. Die DE 10 2008 001 200 schlägt eine Doppelkupplungseinrichtung vor, die eine Anfahrkupplung zur Verbindung einer Antriebswelle mit einer Getriebeeingangswelle und eine Lastschaltkupplung für eine direkte Verbindung der Abtriebswelle mit einer abtriebsseitigen Getriebehauptwelle aufweist, wobei die Doppelkupplung vorzugsweise über eine gemeinsame Stelleinrichtung, die wahlweise die eine oder andere der beiden Kupplungen oder beide Kupplungen in eine Offenstellung oder Schließstellung bringen kann, betätigbar ist.

Weiterhin ist aus der WO 2007/009 594 A1 ein als Doppelkupplungsgetriebe ausgebildetes automatisiertes Mehrgruppengetriebe in Vorgelegebauweise bekannt. Das Mehrgruppengetriebe umfasst ein Splittergetriebe, dem ein Hauptgetriebe und gegebenenfalls ein Bereichsgetriebe nachgeordnet sind. Sämtliche nicht direkten Vorwärtsgänge verlaufen im Kraftfluss über dieselbe Vorgelegewelle. Ein Direktgang kann im Kraftfluss alternativ über einen anderen Leistungspfad verlaufen. Dadurch ergibt sich eine Lastschaltbarkeit einer Gruppe von zum Direktgang benachbarten Gängen innerhalb des Hauptgetriebes. Über die Doppelkupplung ist eine sich überschneidende Ansteuerung eines, je nach Gangwechsel, angewählten Vorwärtsgang-Leistungspfades und des Direktgang-Leistungspfades möglich. Die eine Kupplung steuert den einen Leistungspfad, die andere Kupplung steuert den anderen Leistungspfad. Ist die eine Kupplung geschlossen und die andere Kupplung geöffnet, können somit gleichzeitig zwei Gänge im Hauptgetriebe geschaltet sein. Bei der zeitlichen Überschneidung während eines Gangwechsels verläuft dann über den einen Leistungspfad ein abnehmender Anteil einer Getriebeeingangsleistung während über den anderen Leistungspfad ein zunehmender Anteil der Getriebeeingangsleistung verläuft. Der Gangwechsel kann somit unter Last erfolgen. Die Lastschaltfähigkeit des bekannten Getriebes beruht auf den Einsatz einer Doppelkupplung.

Schließlich ist aus der gattungsgemäßen WO 2007/115687 A ein automatisiertes Mehrgruppengetriebe eines Kraftfahrzeuges bekannt mit wenigstens zwei in einem Antriebsstrang im Kraftfluss hintereinander angeordneten Getriebegruppen sowie mit einer Kupplungseinrichtung, die eine Anfahrkupplung aufweist, über die eine Verbindung zwischen einer Antriebswelle eines Antriebsmotors und einer, einer ersten Getriebegruppe zugehörigen Getriebeeingangswelle herstellbar ist. Es ist eine Schalteinrichtung vorgesehen, mittels der eine Verbindung zwischen der Getriebeeingangswelle und einer, einer zweiten Getriebe gruppe zugehörigen Getriebehauptwelle herstellbar ist, wobei die Getriebehauptwelle als eine Getriebeabtriebswelle ausgebildet ist oder zumindest mit einer Getriebeabtriebswelle wirkverbunden ist. Das Mehrgruppengetriebe weist Mittel auf, über die zugkraftunterstützte Gangwechsel durchführbar sind. Die erste Getriebegruppe ist als ein Splittergetriebe mit wenigstens drei Eingangskonstanten ausgebildet.

Vor diesem Hintergrund liegt der Erfindung die Aufgabe zugrunde, die bekannten Mehrgruppengetriebe mit lastschaltfähigen Gängen und die bekannten Verfahren zum Betrieb solcher Getriebe welter zu verbessern und zu flexibilisieren, insbesondere um eine Lastschaltfähigkeit zu erreichen, die nicht zwingend die Verwendung einer Doppelkupplung und/oder eine Zwischengangschaltfähigkeit erfordert.

Die Lösung dieser Aufgabe ergibt sich aus den Merkmalen der unabhängigen Ansprüche, während vorteilhafte Ausgestaltungen und Weiterbildungen der Erfindung den jeweils zugeordneten Unteransprüchen entnehmbar sind.

Der Erfindung liegt die Erkenntnis zugrunde, dass mit einer unabhängig vom Schaltzustand einer Anfahrkupplung synchronisiert schaltbaren zusätzlichen Eingangskonstante, welche unter Umgehung der Anfahrkupplung direkt von einem Antriebsmotor antreibbar ist, bei einem automatisierten Gruppengetriebe ein Anzahl von unter Last schaltbaren Gangwechseln ermöglicht werden kann.

Demnach geht die Erfindung aus von einem automatisierten Mehrgruppengetriebe eines Kraftfahrzeuges, mit wenigstens zwei in einem Antriebsstrang im Kraftfluss hintereinander angeordneten Getriebegruppen, mit einer Kupplungseinrichtung, die eine Anfahrkupplung aufweist, über die eine Verbindung zwischen einer Antriebswelle eines Antriebsmotors und einer, einer ersten Getriebegruppe zugehörigen Getriebeeingangswelle herstellbar ist, mit einer Schalteinrichtung, über die eine Verbindung zwischen der Getriebeeingangswelle und einer, einer zweiten Getriebegruppe zugehörigen Getriebehauptwelle herstellbar ist, wobei die Getriebehauptwelle als eine Getriebeabtriebswelle ausgebildet ist oder zumindest mit einer Getriebeabtriebswelle wirkverbunden ist, und mit Mitteln, über die zugkraftunterstützte Gangwechsel durchführbar sind. Zur Lösung der gestellten Aufgabe sieht die Erfindung außerdem vor, dass die erste Getriebegruppe als ein Splittergetriebe mit wenigstens drei Eingangskonstanten ausgebildet ist, wobei eine erste, motorseitige Eingangskonstante mittels einer die Anfahrkupplung überbrückenden Lastschaltkupplung schaltbar ist.

Die erfindungsgemäße Anordnung ist besonders vorteilhaft bei einem Mehrgruppengetriebe, insbesondere für Lastkraftwagen, Busse oder Sonderfahrzeuge, anwendbar, bei dem drei Getriebegruppen mit automatisierter Getriebesteuerung im Kraftfluss hintereinander angeordnet sind, wobei die erste Getriebegruppe als ein wenigstens dreigängiges Splittergetriebe, die zweite Getriebegruppe als ein mehrgängiges Hauptgetriebe und die dritte Getriebegruppe als ein zweigängiges Bereichsgetriebe ausgebildet ist. Das Splittergetriebe und das Hauptgetriebe können als Zahnradwechselgetriebe in einer Bauraum sparenden Vorgelegebauweise ausgebildet sein.

Dabei wird der Momentenfluss vorzugsweise parallel über zwei, dem Splittergetriebe und dem Hauptgetriebe gemeinsam zugehörige Vorgelegewellen geführt, wodurch sich eine ausgewogene Lastverteilung der Wellen und Zahnräder des Getriebes ergibt. Das nachgeschaltete Bereichsgetriebe kann in einer Planetenbauweise, mit beispielsweise einem inneren Sonnenrad, einem von einem Planetenträger geführten Planetenradsatz und einem äußeren Hohlrad, ausgebildet sein.

Bei einer Getriebekonfiguration, die eine besonders hohe Gangzahl mit einer entsprechend feinen Gangabstufung, wie sie für schwere Lastkraftwagen vorteilhaft ist, zur Verfügung stelle, kann ein dreigängiges Hauptgetriebe mit Rückwärtsgang vorgesehen sein. Aus der Kombination von drei Splittergängen, drei Hauptgetriebegängen und zwei Bereichsgetriebegängen ergeben sich dann achtzehn Vorwärtsgänge und bis zu sechs Rückwärtsgänge, von denen siebzehn Vorwärts- und zwei Rückwärtsgänge sinnvoll nutzbar sind. In dieser Konfiguration kann der zweithöchste Gang, also der 17, gang, beispielsweise als ein Direktgang mit dem Übersetzungsverhältnis i =1:1 und der höchste Gang, also der 18. Gang, als ein Overdrivegang mit einem besonders schnellen Übersetzungsverhältnis i<1, ausgebildet sein.

Damit steht einerseits ein - nicht notwendigerweise lastschaltbarer - "Super-Schnellgang" (18. Gang) für ein minder beladenes Fahrzeug, beispielsweise ein Lastkraftwagen, der sich auf einer Leerfahrt auf einer Fernverkehrsstraße fortbewegt, zum Abbau von Leistungsüberschüssen am Verbrennungsmotor und damit zur Verbrauchsreduzierung zur Verfügung. Andererseits wird vorteilhaft eine zugkrafterhaltende Lastschaltung in relevanten Gängen, wie beispielsweise Zughochschaltungen in einen Direktgang und Zugrückschaltungen aus dem Direktgang, für das voll beladene Fahrzeug ermöglicht, wodurch ein hoher Fahrkomfort gewährleistet ist.

Alle drei Getriebegruppen sind vorzugsweise synchronisiert, d.h. sie verfügen über Synchronkupplungen mit entsprechenden Synchronisierungsmitteln als Schalteinrichtungen, wobei erfindungsgemäß eine zusätzliche motorseitige Eingangskonstante mittels einer Lastschaltkupplung schaltbar ist.

Die Lastschaltkupplung ist als eine Synchronkupplung ausgebildet. Diese Synchronkupplung ist jedoch über eine Kurbelwellenumführung direkt mit dem Antriebsmotor wirkverbunden, so dass die erste Eingangskonstante unabhängig vom Schaltzustand der Anfahrkupplung antreibbar ist. Demnach werden alle Gänge; bei denen die erste Eingangskonstante geschaltet ist, über die Lastschaltkupplung angetrieben. Alle übrigen Gänge werden über die Anfahrkupplung angetrieben.

Die Synchronkupplung weist ein erstes Schaltelement auf, welches über eine Hohlwelle, durch die die Getriebeeingangswelle hindurchgeführt ist, mit einem mit der Antriebswelle verbundenen Eingangsteil der Kupplungseinrichtung verbunden ist, und ein zweites, mit dem ersten Schaltelement zusammenwirkendes Schaltelement aufweist, welches mit einem auf der Hohlwelle drehbar gelagerten Losrad der ersten Eingangskonstanten verbunden ist.

Eine besonders kompakt bauende Getriebeanordnung mit einer vergleichsweise geringen axialen Baulänge wird vorteilhaft dadurch erreicht, dass die Synchronkupplung zwischen der ersten und einer zweiten Eingangskonstante angeordnet ist.

Weiterhin geht die Erfindung aus von einem Verfahren zum Betrieb eines automatisierten Mehrgruppengetriebes eines Kraftfahrzeuges, mit wenigstens zwei in einem Antriebsstrang im Kraftfluss hintereinander angeordneten Getriebegruppen, mit einer Kupplungseinrichtung, die eine Anfahrkupplung aufweist, über die eine Verbindung zwischen einer Antriebswelle eines Antriebsmotors und einer, einer ersten Getriebegruppe zugehörigen Getriebeeingangswelle herstellbar ist, mit einer Schalteinrichtung, über die eine Verbindung zwischen der Getriebeeingangswelle und einer, einer zweiten Getriebegruppe zugehörigen Getriebehauptwelle herstellbar ist, wobei die Getriebehauptwelle als eine Getriebeabtriebswelle ausgebildet ist oder zumindest mit einer Getriebeabtriebswelle wirkverbunden ist, und mit Mitteln, über die zugkraftunterstützte Gangwechsel durchführbar sind. Die Erfindung sieht zur Lösung der eingangs gestellten Aufgabe vor, dass bei einem zugkraftunterstützten Gangwechsel, je nach Zughoch- oder Zugrückschaltung, die Anfahrkupplung geschlossen oder geöffnet wird, während gegensinnig überschneidend eine die Anfahrkupplung überbrückende Lastschaltkupplung, über die eine motorseitige Eingangskonstante der ersten Getriebegruppe geschaltet wird, geöffnet oder geschlossen wird.

Insbesondere kann vorgesehen sein, dass zur Durchführung eines zugkraftunterstützten Gangwechsels bei einem Getriebe mit einem dreigängigen Splittergetriebe, einem dreigängigen Hauptgetriebe und einem zweigängigen Bereichsgetriebe,
- die Lastschaltkupplung zur Schaltung der ersten Eingangskonstante zwischen einer Offenstellung und einer Schließstellung wechselt,
- die Anfahrkupplung schlupfend zwischen einer Offenstellung und einer Schließstellung wechselt,
- eine Schalteinrichtung zur Schaltung einer zweiten und einer dritten Eingangskonstante zwischen einer Schaltstellung und einer Neutralstellung wechselt,
- die Schalteinrichtung zur Herstellung einer Verbindung der Getriebeeingangswelle mit der Getriebehauptwelle in unveränderter Schaltstellung bleibt,
- eine Schalteinrichtung zur Schaltung eines 1. Ganges und eines Rückwärtsganges des Hauptgetriebes in unveränderter Schaftstellung bleibt, und
- eine Schalteinrichtung zur Bereichsumschaltung des Bereichsgetriebes in unveränderter Schaltstellung bleibt.

Außerdem kann vorgesehen sein, dass zur Schaltung der nicht direkten Vorwärtsgänge eine Kraftflussverbindung zwischen der Antriebswelle und der Getriebehauptwelle hergestellt wird, die über wenigstens eine Vorgelegewelle verläuft, während zur Schaltung eines Direktganges einerseits die Getriebeeingangswelle und die abtriebsseitige Getriebehauptwelle über die zugehörige Schalteinrichtung direkt miteinander verbunden werden, und andererseits die Getriebeeingangswelle und die Antriebswelle des Antriebsmotors über die Anfahrkupplung miteinander verbunden werden.

Ein lastschaltbarer Hochschaltvorgang geht dann bei der Ausführungsform mit einer Synchronkupplung als Lastschaltkupplung stets von einem Gang aus, bei dem die zusätzliche Eingangskonstante geschaltet, also die Synchronkupplung geschlossen und die Anfahrkupplung überbrückt ist. Die Anfahrkupplung wird beim Gangwechsel schlupfend geschlossen, während die Lastschaltkupplung geöffnet wird. Weiterhin wird die Synchronkupplung zwischen der mittleren und der dritten Eingangskonstante geschaltet. Alle übrigen Synchronkupplungen bleiben in ihrer Schaltstellung unverändert.

Ein Rückschaltvorgang kann sinngemäß in umgekehrter Reihenfolge ablaufen.

Zur Verdeutlichung der Erfindung ist der Beschreibung eine Zeichnung mit zwei Ausführungsbeispielen beigefügt. In dieser zeigt
- Fig. 1: ein Getriebeschema eines Mehrgruppengetriebes eines Kraftfahrzeuges mit einer Lastschaltkupplung zum Schalten zugkraftunterstützter Gangwechsel,
- Fig. 2: eine Gangwechseltabelle des Getriebes der Fig. 1,
- Fig. 3a: der Momentenfluss des Getriebes der Fig. 1 in einem 16. Gang,
- Fig. 3b: der Momentenfluss des Getriebes der Fig. 1 bei einem Gangwechsel vom 16. Gang in einen als Direktgang ausgeführten 17.Gang,
- Fig. 3c: der Momentenfluss des Getriebes der Fig. 1 im 17. Gang,
- Fig. 4: eine nicht erfindungsgemäße Ausführungsform eines Getriebeschemas eines Mehrgruppengetriebes eines Kraftfahrzeuges mit einer Lastschaltkupplung zum Schalten zugkraftunterstützter Gangwechsel, und
- Fig. 5: eine Gangwechseltabelle des nicht erfindungsgemäßen Getriebes der Fig. 4.

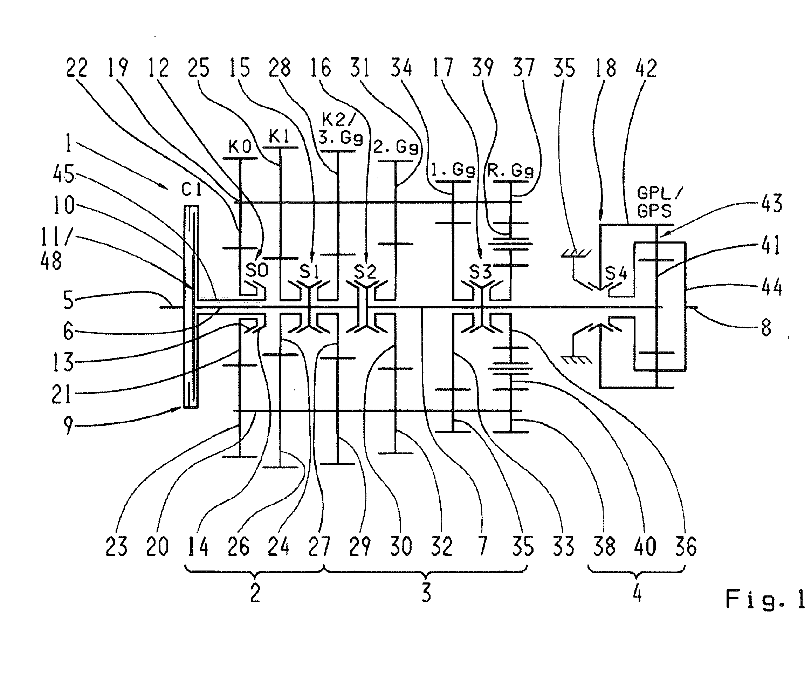

Demnach zeigt Fig. 1 ein Vorgelegeweilengetriebe 1, wie es als Mehrgruppengetriebe beispielsweise für einen Antriebsstrang eines Femverkehrs-Lastkraftwagen vorgesehen sein kann. Das erfindungsgemäße Radsatzkonzept basiert grundsätzlich auf der bekannten Baureihe ZF-AS Tronic der Anmelderin, mit zwei parallelen, drehbar gelagerten Vorgelegewellen 19, 20 und drei hintereinander angeordneten Getriebegruppen 2, 3 und 4.

Eine erste, motorseitige Getriebegruppe 2 ist als ein Splittergetriebe ausgebildet, welches erfindungsgemäß - nicht wie üblich zwei - sondern drei Eingangskonstanten K0, K1, K2 aufweist. Eine zweite, mittlere Getriebegruppe 3 ist als ein - nicht wie üblicherweise klauengeschaltetes - sondern synchronisiertes Hauptgetriebe mit drei Vorwärtsgängen und einem Rückwärtsgang ausgebildet, wobei ein 3. Gang und die dritte Eingangskonstante K2 einen gemeinsamen Radsatz bilden. Eine dritte, abtriebsseitige Getriebegruppe 4 ist als ein Planetengetriebe GPUGPS ausgebildet, welches zwischen zwei Gangbereichen umschaltbar ist.

Die drei Eingangskonstanten K0, K1, K2 weisen jeweils ein auf der einen Vorgelegewelle 19 sitzendes Festrad 22, 25, 28 und ein auf der anderen Vorgelegewelle 20 sitzendes Festrad 23, 26, 29 auf. Die daraus gebildeten Festradpaare 22-23, 25-26, 28-29 stehen im Eingriff mit einem jeweilige Losrad 21, 24, 27. Die mittlere Eingangskonstante K1 und die dritte, innere Eingangskonstante K2 sind mittels einer Schalteinrichtung 15 schaltbar, welche als eine Synchronkupplung S1 mit zwei Schaltstellungen und einer Neutralstellung ausgebildet ist. Die Synchronkupplung S1 sitzt mit üblichen, verschiebbaren Synchronisierungs- und Schaltelementen auf einer Getriebeeingangswelle 6, so dass in einer ersten Schaltstellung das Losrad 24 der mittleren Eingangskonstante K1 und in einer zweiten Schaltstellung das Losrad 27 der dritten Eingangskonstanten K2 drehfest mit der Getriebeeingangswelle 6 verbindbar sind. Dazwischen ist die Neutralstellung vorgesehen.

Die zusätzliche, äußere Eingangskonstante K0 weist erfindungsgemäß eine Lastschaftkupplung 12 auf, die als eine Synchronkupplung S0 mit einer Schaltstellung und einer Neutralstellung ausgebildet ist. Die Synchronkupplung S0 besitzt ein erstes Schaltelement 14, welches über eine Hohlwelle 45 fest mit einem Eingangsteil 10 einer Kupplungseinrichtung 9 verbunden ist. Das Losrad 21 der Eingangskonstante K0 ist drehbar auf der Hohlwelle 45 gelagert. Die Getriebeeingangswelle 6 ist konzentrisch durch die Hohlwelle 45 hindurchgeführt und an ihrem motorseitigen Ende mit einem Ausgangsteil 48 einer als Reibkupplung C1 ausgebildeten Anfahrkupplung 11 der Kupplungseinrichtung 9 verbunden. Das Eingangsteil 10 der Kupplungseinrichtung 9 ist wiederum mit einer Antriebswelle 5, insbesondere einer Kurbelwelle, eines nicht dargestellten Antriebsmotors, insbesondere eines Verbrennungsmotors, verbunden. Ein zweites, mit dem ersten Schaltelement 14 korrespondierendes Schaltelement 13 ist mit dem Losrad 21 verbunden, so dass die Synchronkupplung S0 in einer Schaltstellung das Losrad 21 kraftschlüssig mit der Antriebswelle 5 verbindet, d.h. eine Kurbelwellenumführung der Kupplungseinrichtung 9 zu der Eingangskonstanten K0 realisiert, und ansonsten die Neutralstellung einnimmt.

Zwischen dem Splittergetriebe 2 und dem dahinter angeordneten Hauptgetriebe 3 ist eine weitere, als Synchronkupplung S2 ausgebildete Schalteinrichtung 16 angeordnet. Über diese Synchronkupplung S2 ist in einer ersten Schaltstellung die antriebsseitige Getriebeeingangswelle 6 mit einer dem Hauptgetriebe 3 zugeordneten, abtriebsseitigen Getriebehauptwelle 7 verbindbar. In einer zweiten Schaltstellung ist die Getriebehauptwelle 7 mit einem Losrad 30 eines 2. Hauptgetriebeganges drehfest verbindbar. Weiterhin ist eine Neutralstellung vorgesehen. Über die Synchronkupplung S2 ist jedoch keine Verbindung zwischen dem Losrad 27 der inneren Eingangskonstante K2 und der Getriebehauptwelle 7 herstellbar. Die Synchronkupplung S2 ist also erfindungsgemäß von der benachbarten dritten Eingangskonstanten K2 vollständig entkoppelt.

Das Hauptgetriebe 3 weist drei Vorwärtsgänge 1.Gg, 2.Gg, 3.Gg sowie einen Rückwärtsgang R.Gg auf. Der 1.Gang und der 2.Gang umfassen jeweils zwei Festräder 34, 35 bzw. 31, 32 und ein Losrad 33 bzw. 30. Der 3.Gang ist gemeinsam mit der dritten Eingangskonstante K2 des Splittergetriebes 2 realisiert.

Der Rückwärtsgang R.Gg umfasst zwei Festräder 37, 38, ein Losrad 36 und zwei drehbar gelagerte Zwischenräder 39, 40 zur Drehrichtungsumkehr, die einerseits mit dem jeweils zugehörigen Festrad 37 bzw. 38 und andererseits mit dem Losrad 36 kämmen. Zur Schaltung des 1.Ganges und des Rückwärtsgangs R.Gg ist eine Schalteinrichtung 17 mit Synchronisierung S3 vorgesehen. Über diese Synchronkupplung S3 sind die zugehörigen Losräder 33 bzw. 36 je nach Stellung drehfest mit der Getriebehauptwelle 7 verbindbar oder in einer Neutralstellung. Der 2.Gang ist über die Synchronkupplung S2 schaltbar. Der 3.Gang ist über die Synchronkupplung S1 schaltbar.

Den beiden Vorgelegewellen-Getriebegruppen 2 und 3 ist ein als Planetengetriebe ausgebildetes Bereichsgetriebe 4 nachgeschaltet. Ein abtriebsseitiges Ende der Getriebehauptwelle 7 ist dazu mit einem Sonnenrad 41 verbunden. Zwischen dem zentralen Sonnenrad 41 und einem äußeren Hohlrad 42 ist ein Planetenradsatz 43 von einem Planetenträger 44 geführt. Die Planetenräder 43 kämmen einerseits mit dem Sonnenrad 41 und andererseits mit dem äußeren Hohlrad 42. Der Planetenträger 44 ist ausgangsseitig mit einer Getriebeabtrisbswelle 8 verbunden.

Zur Schaltung des Bereichsgetriebes 4 ist eine Schalteinrichtung 18, vorteilhaft als eine Synchronkupplung S4 ausgebildet, angeordnet. Die Synchronkupplung S4 verbindet in einer ersten Schaltstellung das Hohlrad 42 mit einem Gehäuse 35 und in einer zweiten Schaltstellung das Hohlrad 42 mit dem Planetenträger 44 bzw. mit der Getriebeabtriebswelle 8. In der ersten Schaltstellung entspricht das Drehzahlverhältnis von Getriebeabtriebswelle 8 und Getriebehauptwelle 7 der Übersetzung des Planetengetriebes, in der zweiten Schaltstellung läuft das Bereichsgetriebe 4 verblockt, also direkt übersetzt, mit.

In der Kombination der drei Getriebegruppen 2, 3, 4 ergeben sich 3x3x2=18 mögliche Schaltstellungen für Vorwärtsgänge und 3x1x2=6 mögliche Schaltstellungen für Rückwärtsgänge, von denen 17 teilweise lastschaltbare Vorwärtsgänge und 2 Rückwärtsgänge im Fahrbetrieb sinnvoll nutzbar sind.

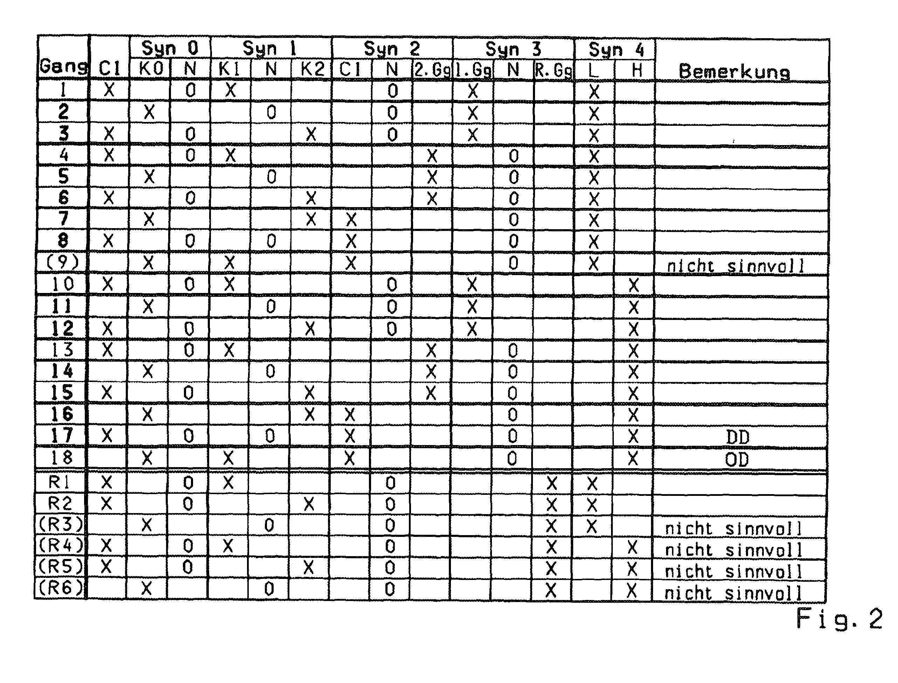

Der Kraftfluss der einzelnen Gänge und die lastschaltbaren Gangwechsei gehen aus der Tabelle in Fig. 2 hervor. In dieser Tabelle sind in den Spalten C1 für die Anfahrkupplung 11 und Syn 0, Syn 1, Syn 2, Syn 3, Syn 4 für die Synchronkupplungen S0, S1, S2, S4 die zugehörigen Schaltstellungen der Konstanten K0, K1, K2, der Gänge 1.Gg, 2.Gg und der Bereiche L, H mit einem "X" und die Neutralstellungen mit einer "0" eingetragen. Bei dem Berelchsgetriebe 4 wird zwischen einem unteren Gangbereich L mit den Gängen 1 bis 9 und einem oberen Gangbereich H mit den Gängen 10 bis 18 unterschieden. Die nicht lastschaltbaren Gangwechsel sind jeweils durch eine dickere Linie markiert. Aus der Tabelle ist erkennbar, dass die Gangwechsel "2.Gg - 3.Gg", "5.Gg - 6Gg", "7.Gg - 8.Gg", "11.Gg - 12.Gg", "14.Gg - 15.Gg" und 16.Gg - 17.Gg" bei Zughoch- und Zugrückschaltungen zugkraftunterstützt sind. Der 17. Gang ist der Direktgang (DD). Der 18. Gang ist als ein Schnellgang (OD) ausgelegt.

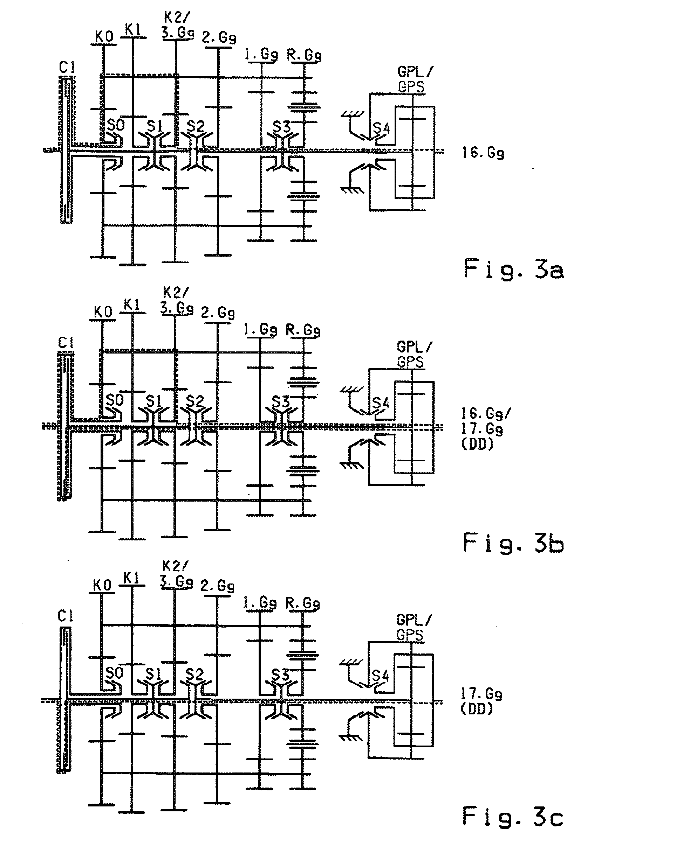

Im Folgenden wird das Verfahren zur Durchführung eines zugkraftunterstützten Gangwechsels bei dem beschriebenen Getriebe 1 am Beispiel einer Zughochschaltung in den Direktgang erläutert. Der Momentenfluss im Ursprungsgang, der Momentenfluss bei der Überschneidung unter Last und der Momentenfluss im Zielgang sind in Fig. 3a bis Fig. 3c gepunktet hervorgehoben.

Zunächst befindet sich das Getriebe im 16. Gang. Wie in Fig. 3a erkennbar, ist dabei die Anfahrkupplung 11 geöffnet und dennoch antriebswirksam überbrückt. Der Antrieb verläuft bei geschlossener Synchronkupplung S0 über die erste Eingangskonstante K0. Der Abtrieb verläuft bei geschlossener Synchronkupplung S1 über die dritte Eingangskonstante K2 und weiter direkt zur Antriebswelle 8.

Bei der Schaltung vom 16.Gang in den 17.Gang, bzw. Direktgang, wird die Lastschaltkupplung 12 bzw. Synchronkupplung S0 der vorgelagerten Eingangskonstante K0 sowie die Schalteinrichtung 15 bzw. Synchronkupplung S1 zwischen der zweiten Eingangskonstante K1 und der dritten Eingangskonstante K2 geöffnet, während überschneidend die Anfahrkupplung 11 im Schlupf in Schließrichtung bis zur Erreichung von Drehzahlgleichheit zwischen Getriebeabtriebswelle 8 und Antriebswelle 5 (Motordrehzahl) angesteuert und dann vollständig geschlossen wird. Der Momentenfluss verzweigt sich somit temporär über beide Gänge wie in Fig. 3b dargestellt, wobei das Drehmoment über den 16. Gang zeitlich abnimmt und über den 17. Gang zunimmt. Die Getriebeeingangswelle 6 und die Getriebehauptwelle 7 sind während dieses Gangwechsels über die zugehörige Schalteinrichtung 16 bzw. Synchronkupplung S2 miteinander verbunden. Die Schalteinrichtung 17 bzw. Synchronkupplung S3 zur Schaltung des 1. Ganges und des Rückwärtsganges des Hauptgetriebes 3 bleibt unverändert in Neutralstellung. Weiterhin ist die Getriebehauptwelle 7 mit der Getriebeabtriebswelle 8 wirkverbunden, wobei das Hohlrad 42 und der Planetenträger 44 des Bereichsgetriebes 4 miteinander verblockt sind, so dass das Bereichsgetriebe 4 mit der Drehzahl der Getriebehauptwelle 7 umläuft, also in einem oberen Gangbereich eingestellt ist.

Fig. 3c zeigt den Momentenfluss im Direktgang, also 17.Gang. Der Antrieb erfolgt über die vollständig eingerückte Anfahrkupplung 11 und die geschlossene Synchronkupplung S2 direkt zur Getriebehauptwelle 7, und über das mittels der Synchronkupplung S4 verblockte Bereichsgetriebe 4 zur Getriebeabtriebswelle 8.

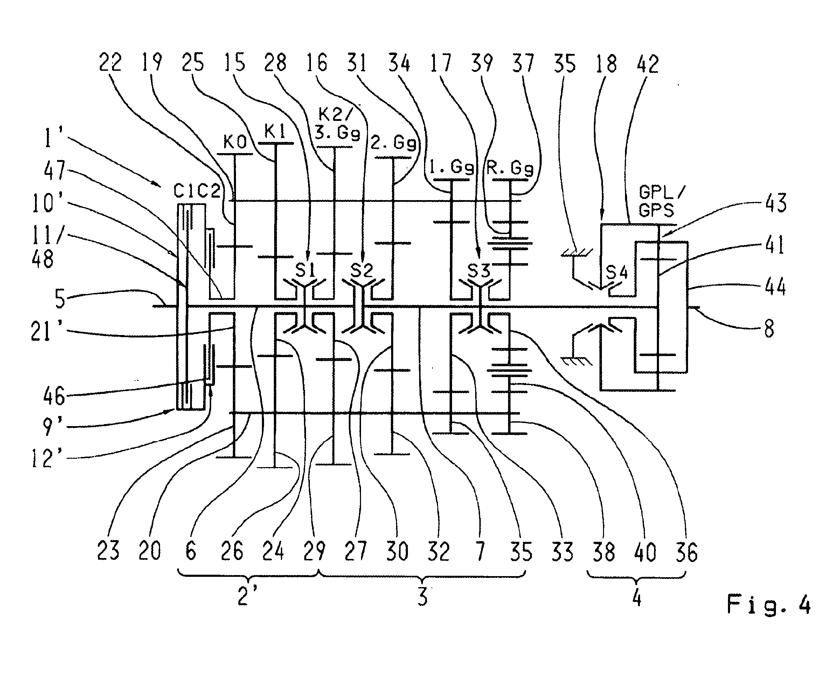

Die Fig. 4 zeigt ein nicht erfindungsgemäßes Vorgelegewellengetriebe 1' mit einer Kupplungseinrichtung 9'. Anstelle der als Synchronkupplung S0 ausgebildeten Lastschaltkupplung 12 ist bei dieser Ausführungsform eine als Reibkupplung C2 ausgebildete lastschaltkupplung 12' vorgesehen. Die Lastschaltkupplung 12' bildet mit der Anfahrkupplung 11 eine Doppelkupplung mit einem gemeinsamen Eingangsteil 10' bzw. mit zwei einstückig miteinander verbundenen Eingangstellen. Ein Ausgangsteil 46 der Lastschaltkupplung 12' ist über eine Hohlwelle 47 mit einem Losrad 21' der ersten Eingangskonstanten K0 verbunden. Der übrige Aufbau entspricht dem Aufbau des oben erläuterten Getriebes 1.

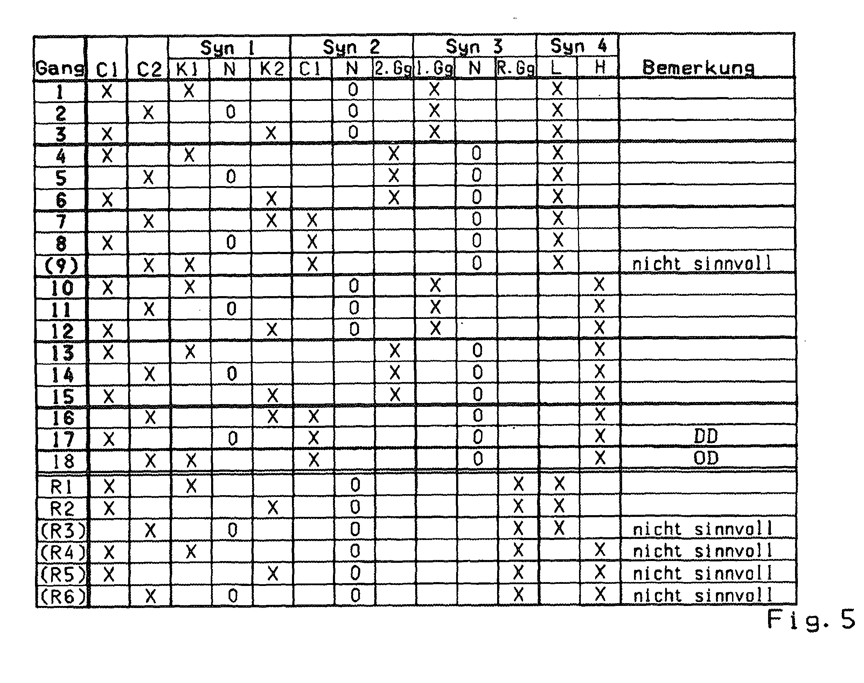

Fig. 5 zeigt schließlich ein zugehöriges Gangschema ähnlich dem der Fig. 3, wobei die nicht lastschaltbaren Gangwechsel wiederum jeweils durch eine dicker gezeichnete Linie markiert sind. Darin fällt auf, dass mehrere Dreierkombinationen von lastschaltbaren Gängen durch jeweils einen nicht lastschaltbaren Gangwechsel voneinander getrennt sind. Zugkraftunterstützte Gangwechsel, bei diesem Getriebe 1' können sinngemäß analog zum dem beispielhaft für das Getriebe 1 erläuterten Gangwechsel erfolgen.

### Bezugszeichenliste

- 1, 1': Vorgelegewellengetriebe
- 2, 2': Getriebegruppe, Splittergetriebe
- 3: Getriebegruppe, Hauptgetriebe
- 4: Getriebegruppe, Bereichsgetriebe
- 5: Abtriebswelle
- 6: Getriebeeingangswelle
- 7: Getriebehauptwelle
- 8: Getriebeabtriebswelle
- 9, 9': Kupplungseinrichtung
- 10, 10': Kupplungseingangsteil
- 11: Anfahrkupplung
- 12: Lastschaltkupplung, Synchronkupplung S0
- 12': Lastschaltkupplung, Reibkupplung C2
- 13: Schaltelement
- 14: Schaltelement
- 15: Schalteinrichtung, Synchronkupplung S1
- 16: Schalteinrichtung, Synchronkupplung S2
- 17: Schalteinrichtung, Synchronkupplung S3
- 18: Schalteinrichtung, Synchronkupplung S4
- 19: Vorgelegewelle
- 20: Vorgelegewelle
- 21, 21': Losrad
- 22: Festrad
- 23: Festrad
- 24: Losrad
- 25: Festrad
- 26: Festrad
- 27: Losrad
- 28: Festrad
- 29: Festrad
- 30: Losrad
- 31: Festrad
- 32: Festrad
- 33: Losrad
- 34: Festrad
- 35: Festrad
- 36: Losrad
- 37: Festrad
- 38: Festrad
- 39: Zwischenrad
- 40: Zwischenrad
- 41: Sonnenrad
- 42: Hohlrad
- 43: Planetenradsatz
- 44: Planetenradträger
- 45: Hohlwelle
- 46: Lastschaftkupplungsausgangsteil
- 47: Hohlwelle
- 48: Anfahrkupplungsausgangsteil

- 1.Gg: Hauptgetriebevorwärtsgang
- 2.Gg: Hauptgetriebevorwärtsgang
- 3.Gg: Hauptgetriebevorwärtsgang
- R.Gg: Hauptgetrieberückwärtsgang
- C1: Reibkupplung
- C2: Reibkupplung
- GPUGPS: Planetengetriebe
- K0: Erste Splittergetriebe-Eingangskonstante
- K1: Zweite Splittergetriebe-Eingangskonstante
- K2: Dritte Splittergetriebe-Eingangskonstante
- S0: Synchronkupplung
- S1: Synchronkupplung
- S2: Synchronkupplung
- S3: Synchronkupplung
- S4: Synchronkupplung

## Patentansprüche

1. Automatisiertes Mehrgruppengetriebe eines Kraftfahrzeuges, mit wenigstens zwei In einem Antriebsstrang im Kraftfluss hintereinander angeordneten Getriebegruppen (2, 2', 3), mit einer Kupplungseinrichtung (9, 9'), die eine Anfahrkupplung (11) aufweist, über die eine Verbindung zwischen einer Antriebswelle (5) eines Antriebsmotors und einer, einer ersten Getriebegruppe (2, 2') zugehörigen Getriebeeingangswelle (6) herstellbar ist, mit einer Schalteinrichtung (16), mittels der eine Verbindung zwischen der Getriebeeingangswelle (6) und einer, einer zweiten Getriebegruppe (3) zugehörigen Getriebehauptwelle (7) herstellbar ist, wobei die Getriebehauptwelle (7) als eine Getriebeabtriebswelle ausgebildet ist oder zumindest mit einer Getriebeabtriebswelle (8) wirkverbunden ist, und mit Mitteln, über die zugkraftunterstützte Gangwechsel durchführbar sind, wobei die erste Getriebegruppe (2, 2') als ein Splittergetriebe mit wenigstens drei Eingangskonstanten (K0, K1, K2) ausgebildet ist, **dadurch gekennzeichnet, dass** die erste, motorseitige Eingangskonstante (K0) mittels einer die Anfahrkupplung (11) überbrückenden Synchronkupplung (S0) schaltbar ist, die ein erstes Schaltelement (14) aufweist, welches über eine Hohlwelle (46), durch welche die Getriebeeingangswelle (6) hindurchgeführt ist, mit einem mit der Antriebswelle (5) verbundenen Eingangsteil (10) der Kupplungseinrichtung (9) verbunden ist, und dass die Synchronkupplung (S0) ein zweites, mit dem ersten Schaltelement (14) zusammenwirkendes Schaltelement (13) aufweist, welches mit einem auf der Hohlwelle (45) drehbar gelagerten Losrad (21) der ersten Eingangskonstanten (K0) verbunden ist, wobei die Synchronkupplung (S0) die einzige Schalteinrichtung zwischen der Antriebswelle (5) des Antriebsmotors und dem Losrad (21) der ersten Eingangskonstanten (K0) ist.

2. Mehrgruppengetriebe nach Anspruch 1, **dadurch gekennzeichnet, dass** die Synchronkupplung (S0) zwischen der ersten Eingangskonstante (K0) und einer zweiten Eingangskonstante (K1) angeordnet ist.

3. Mehrgruppengetriebe nach einem der Ansprüche 1 oder 2, **dadurch gekennzeichnet, dass** zum Schalten wenigstens der zweiten und einer dritten Eingangskonstante (k1, K2) des Splittergetriebes (2, 2') sowie der Übersetzungen der vorgesehenen weiteren Getriebegruppen (3, 4) Synchronkupplungen (S1, S2, S3, S4) vorgesehen sind.

4. Mehrgruppengetriebe nach einem der Ansprüche 1 bis 3, **dadurch gekennzeichnet, dass** drei Getriebegruppen (2, 2', 3, 4) im Kraftfluss hintereinander angeordnet sind, wobei die erste Getriebegruppe (2, 2') als das Splittergetriebe mit wenigstens drei Eingangskonstanten (K0, K1, K2), die zweite Getriebegruppe (3) als ein mehrgängiges Hauptgetriebe, und die dritte Getriebegruppe (4) als ein zweigängiges Bereichsgetriebe ausgebildet ist.

5. Mehrgruppengetriebe nach Anspruch 4, **dadurch gekennzeichnet, dass** das Splittergetriebe (2, 2') und das Hauptgetriebe (3) in einer Vorgelegebauweise ausgebildet sind, und dass das nachgeschaltete Bereichsgetriebe (4) in einer Planetenbauweise ausgebildet ist

6. Verfahren zum Betrieb eines automatisierten Mehrgruppengetriebes eines Kraftfahrzeuges, mit wenigstens zwei in einem Antriebsstrang im Kraftfluss hintereinander angeordneten Getriebegruppen (2, 2', 3), mit einer Kupplungseinrichtung (9, 9'), die eine Anfahrkupplung (11) aufweist, über die eine Verbindung zwischen einer Antriebswelle (5) eines Antriebsmotors und einer, einer ersten Getriebegruppe (2, 2') zugehörigen, Getriebeeingangswelle (6) herstellbar ist, mit einer Schalteinrichtung(16), über die eine Verbindung zwischen der Getriebeeingangswelle (6) und einer, einer zweiten Getriebegruppe (3) zugehörigen, Getriebehauptwelle (7) herstellbar ist, wobei die Getriebehauptwelle (7) als eine Getriebeabtriebswelle ausgebildet ist oder zumindest mit einer Getriebeabtriebswelle (8) wirkverbunden ist, und mit Mitteln, über die zugkraftunterstützte Gangwechsel durchführbar sind, **dadurch gekennzeichnet, dass** bei einem zugkraftunterstützten Gangwechsel, je nach Zughoch- oder Zugrückschattung, die Anfahrkupplung (11) geschlossen oder geöffnet wird, während gegensinnig überschneidend eine die Anfahrkupplung (11) überbrückende Synchronkupplung (SO), über die eine motorseitige Eingangskonstante (K0) der ersten Getriebegruppe (2, 2') geschaltet wird, und die ein erstes Schaltelement (14) aufweist, welches über eine Hohlwelle (45), durch welche die Getriebeeingangswelle (6) hindurchgeführt ist, mit einem mit der Antriebswelle (5) verbundenen Eingangstell (10) der Kupplungseinrichtung (9) verbunden ist, und die ein zweites, mit dem ersten Schaltelement (14) zusammenwirkendes Schaltelement (13) aufweist, welches mit einem auf der Hohlwelle (45) drehbar gelagerten Losrad (21) der ersten Eingangskonstanten (K0) verbunden ist, geöffnet oder geschlossen wird.

7. Verfahren nach Anspruch 6, **dadurch gekennzeichnet, dass** zur Durchführung eines zugkraftunterstützten Gangwechsels bei einem Getriebe mit einem dreigängigen Splittergetriebe (2, 2'), einem dreigängigen Hauptgetriebe (3) und einem zweigängigen Bereichsgetriebe (4),
- die Synchronkupplung (S0) zur Schaltung der ersten Eingangskonstante (K0) zwischen einer Offenstellung und einer Schließstellung wechsett,
- die Anfahrkupplung (11) schlupfend zwischen einer Offenstellung und einer Schließstellung wechselt,
- eine Schalteinrichtung (15) zur Schaltung einer zweiten und einer dritten Eingangskonstante (K1, K2) zwischen einer Schaltstellung und einer Neutralstellung wechselt,
- die Schalteinrichtung (16) zur Herstellung einer Verbindung der Getriebeeingangswelle (6) mit der Getriebehauptwelle (7) in unveränderter Schaltstellung bleibt.
- eine Schalteinrichtung (17) zur Schaltung eines 1. Ganges und eines Rückwärtsganges des Hauptgetriebes (3) in unveränderter Schaltstellung bleibt, und
- eine Schalteinrichtung (18) zur Bereichsumschaltung des Bereichsgetriebes (4) in unveränderter Schaltstellung bleibt.

## Claims

1. Automated multi-group transmission of a motor vehicle, with at least two transmission groups (2, 2', 3) arranged consecutively in the flow of force in a drivetrain, with a clutch device (9, 9'), which has a starting clutch (11), via which a connection between a drive shaft (5) of a drive motor and a transmission input shaft (6), which belongs to a first transmission group (2, 2'), can be produced, with a shift device (16), by means of which a connection between the transmission input shaft (6) and a transmission main shaft (7), which belongs to a second transmission group (3), can be produced, wherein the transmission main shaft (7) is formed as a transmission output shaft or is at least operatively connected to a transmission output shaft (8), and with means, via which tractive force-supporting gear changes can be performed, wherein the first transmission group (2, 2') is formed as a splitter transmission with at least three input constants (K0, K1, K2), **characterized in that** the first input constant (K0) on the motor side can be shifted by means of a synchronous clutch (S0) which bridges the starting clutch (11) and has a first shift element (14), which is connected via a hollow shaft (45), through which the transmission input shaft (6) is guided, to an input part (10), which is connected to the drive shaft (5), of the clutch device (9), and **in that** the synchronous clutch (S0) has a second shift element (13) which interacts with the first shift element (14) and is connected to a loose wheel (21), which is rotatably mounted on the hollow shaft (45), of the first input constant (K0), wherein the synchronous clutch (S0) is the only shift device between the drive shaft (5) of the drive motor and the loose wheel (21) of the first input constant (K0).

2. Multi-group transmission according to Claim 1, **characterized in that** the synchronous clutch (S0) is arranged between the first input constant (K0) and a second input constant (K1).

3. Multi-group transmission according to one of Claims 1 and 2, **characterized in that** synchronous clutches (S1, S2, S3, S4) are provided for shifting at least the second and a third input constant (K1, K2) of the splitter transmission (2, 2') and of the transmission ratios of the provided further transmission groups (3, 4).

4. Multi-group transmission according to one of Claims 1 to 3, **characterized in that** three transmission groups (2, 2', 3, 4) are arranged consecutively in the flow of force, wherein the first transmission group (2, 2') is formed as the splitter transmission with at least three input constants (K0, K1, K2), the second transmission group (3) as a multi-gear main transmission, and the third transmission group (4) as a two-gear range transmission.

5. Multi-group transmission according to Claim 4, **characterized in that** the splitter transmission (2, 2') and the main transmission (3) are formed in a countershaft design, and **in that** the downstream range transmission (4) is formed in a planetary design.

6. Method for operating an automated multi-group transmission of a motor vehicle, with at least two transmission groups (2, 2', 3) arranged consecutively in the flow of force in a drivetrain, with a clutch device (9, 9'), which has a starting clutch (11), via which a connection between a drive shaft (5) of a drive motor and a transmission input shaft (6), which belongs to a first transmission group (2, 2'), can be produced, with a shift device (16), by means of which a connection between the transmission input shaft (6) and a transmission main shaft (7), which belongs to a second transmission group (3), can be produced, wherein the transmission main shaft (7) is formed as a transmission output shaft or is at least operatively connected to a transmission output shaft (8), and with means, via which tractive force-supporting gear changes can be performed, **characterized in that**, in the case of a tractive force-supporting gear change, depending on the tractive upshift or tractive downshift, the starting clutch (11) is closed or opened, while, in the opposite direction in an intersecting manner, a synchronous clutch (S0) is opened or closed, which synchronous clutch (S0) bridges the starting clutch (11), via which synchronous clutch (S0) a motor-side input constant (K0) of the first transmission group (2, 2') is shifted and which synchronous clutch (S0) has a first shift element (14), which is connected via a hollow shaft (45), through which the transmission input shaft (6) is guided, to an input part (10), which is connected to the drive shaft (5), of the clutch device (9), and which synchronous clutch (S0) has a second shift element (13) which interacts with the first shift element (14), which second shift element (13) is connected to a loose wheel (21), which is rotatably mounted on the hollow shaft (45), of the first input constant (K0).

7. Method according to Claim 6, **characterized in that**, in order to carry out a tractive force-supporting gear change in the case of a transmission with a three-gear splitter transmission (2, 2'), a three-gear main transmission (3) and a two-gear range transmission (4),
- the synchronous clutch (S0) changes between an open position and a closed position for shifting of the first input constant (K0),
- the starting clutch (11) changes in a slipping manner between an open position and a closed position,
- a shift device (15) changes between a shift position and a neutral position for shifting of a second and a third input constant (K1, K2),
- the shift device (16) remains in an unchanged shift position for production of a connection of the transmission input shaft (6) to the transmission main shaft (7),
- a shift device (17) remains in an unchanged shift position for shifting of a 1^{st} gear and a reverse gear of the main transmission (3), and
- a shift device (18) remains in an unchanged shift position for range switching of the range transmission (4).

## Revendications

1. Boîte de vitesses automatisée multigroupe pour véhicule à moteur, avec au moins deux groupes de transmission (2, 2', 3) disposés l'un derrière l'autre dans le flux de force circulant dans un groupe motopropulseur, avec un dispositif d'embrayage (9, 9') comportant un embrayage de démarrage (11) permettant de réaliser une liaison entre un arbre d'entraînement en entrée (5) d'un moteur d'entraînement et un arbre d'entrée de boîte de vitesses (6) associé à un premier groupe de transmission (2, 2'), avec un dispositif de changement de vitesse (16) permettant de réaliser une liaison entre l'arbre d'entrée de boîte de vitesses (6) et un arbre principal de boîte de vitesses (7) associé à un deuxième groupe de transmission (3), l'arbre principal de boîte de vitesses (7) étant réalisé sous la forme d'un arbre d'entraînement en sortie de boîte de vitesses ou étant au moins relié activement à un arbre d'entraînement en sortie de boîte de vitesses (8) et avec des moyens permettant de réaliser le changement de rapport soutenu par la force de traction, le premier groupe de transmission (2, 2') prenant la forme d'une boîte de vitesses à groupe-relais dotée d'au moins trois constantes d'entrée (K0, K1, K2), **caractérisée en ce que** la première constante d'entrée (K0) située côté moteur peut être commutée à l'aide d'un embrayage synchrone (S0) court-circuitant l'embrayage de démarrage (11), ladite constante comportant un premier élément de changement de vitesse (14) relié par le biais d'un arbre creux (45) traversé par l'arbre d'entrée de boîte de vitesses (6) à une partie d'entrée (10) du dispositif d'embrayage (9) elle-même reliée à l'arbre d'entraînement en entrée (5) et que l'embrayage synchrone (S0) comporte un deuxième élément de changement de vitesse (13) interagissant avec le premier élément de changement de vitesse (14), ledit élément étant relié à une roue folle (21) de la première constante d'entrée (K0) disposée de façon à pouvoir tourner sur l'arbre creux (45), l'embrayage synchrone (S0) étant le seul dispositif de changement de vitesse prévu entre l'arbre d'entraînement en entrée (5) du moteur d'entraînement et la roue folle (21) de la première constante d'entrée (K0).

2. Boîte de vitesses multigroupe selon la revendication 1, **caractérisée en ce que** l'embrayage synchrone (S0) est disposé entre la première constante d'entrée (K0) et une deuxième constante d'entrée (K1).

3. Boîte de vitesses multigroupe selon l'une quelconque des revendications 1 ou 2, **caractérisée en ce que** des embrayages synchrones (S1, S2, S3, S4) sont prévus pour commuter au moins la deuxième et une troisième constante d'entrée (K1, K2) de la boîte de vitesses à groupe-relais (2, 2') ainsi que les réductions des groupes de transmission (3, 4) supplémentaires prévus.

4. Boîte de vitesses multigroupe selon l'une quelconque des revendications 1 à 3, **caractérisée en ce que** trois groupes de transmission (2, 2', 3, 4) sont disposés l'un derrière l'autre dans le flux de force, le premier groupe de transmission (2, 2') prenant la forme de la boîte de vitesses à groupe-relais équipée d'au moins trois constantes d'entrée (K0, K1, K2), le deuxième groupe de transmission (3) prenant la forme d'une boîte de vitesses principale à plusieurs rapports et le troisième groupe de transmission (4) prenant la forme d'une boîte de vitesses sectorisée à deux rapports.

5. Boîte de vitesses multigroupe selon la revendication 4, **caractérisée en ce que** la boîte de vitesses à groupe-relais (2, 2') et la boîte de vitesses principale (3) sont réalisées à la façon d'une transmission intermédiaire et que la boîte de vitesses sectorisée (4) connectée en aval est réalisée de façon planétaire.

6. Procédé de fonctionnement d'une boîte de vitesses automatisée multigroupe pour un véhicule à moteur, avec au moins deux groupes de transmission (2, 2', 3) disposés l'un derrière l'autre dans le flux de force circulant dans un groupe motopropulseur, avec un dispositif d'embrayage (9, 9') comportant un embrayage de démarrage (11) permettant de réaliser une liaison entre un arbre d'entraînement en entrée (5) d'un moteur d'entraînement et un arbre d'entrée de boîte de vitesses (6) associé à un premier groupe de transmission (2, 2'), avec un dispositif de changement de vitesse (16) permettant de réaliser une liaison entre l'arbre d'entrée de boîte de vitesses (6) et un arbre principal de boîte de vitesses (7) associé à un deuxième groupe de transmission (3), l'arbre principal de boîte de vitesses (7) étant réalisé sous la forme d'un arbre d'entraînement en sortie de boîte de vitesses ou étant au moins relié activement à un arbre d'entraînement en sortie de boîte de vitesses (8) et avec des moyens permettant de réaliser le changement de rapport soutenu par la force de traction, **caractérisé en ce qu'**en présence d'un changement de rapport soutenu par la force de traction, l'embrayage de démarrage (11) est respectivement fermé ou ouvert suivant s'il s'agit d'un changement de vitesse par traction vers une vitesse supérieure ou d'un changement de vitesse par traction vers une vitesse inférieure, tandis qu'à l'inverse, un embrayage synchrone (S0) court-circuitant l'embrayage de démarrage (11) est commuté par le biais de la première constante d'entrée (K0) située côté moteur du premier groupe de transmission (2, 2') et comportant un premier élément de changement de vitesse (14) ouvert ou fermé par le biais d'un arbre creux (45) traversé par l'arbre d'entrée de boîte de vitesses (6) relié à une partie d'entrée (10) du dispositif d'embrayage (9) elle-même reliée à l'arbre d'entraînement en entrée (5) et comportant un deuxième élément de changement de vitesse (13) interagissant avec le premier élément de changement de vitesse (14), ledit élément étant relié à une roue folle (21) de la première constante d'entrée (K0) disposée de façon à pouvoir tourner sur l'arbre creux (45).

7. Procédé selon la revendication 6, **caractérisé en ce que** pour effectuer un changement de rapport soutenu par la force de traction dans une boîte de vitesses pourvue d'une boîte de vitesses à groupe-relais (2, 2') à trois rapports, d'une boîte de vitesses principale (3) à trois rapports et d'une boîte de vitesses sectorisée (4) à deux rapports :
- l'embrayage synchrone (S0) bascule entre une position ouverte et une position fermée pour commuter la première constante d'entrée (K0) ;
- l'embrayage de démarrage (11) bascule par glissement entre une position ouverte et une position fermée ;
- un dispositif de changement de vitesse (15) bascule entre une position de changement de vitesse et une position neutre pour commuter une deuxième et une troisième constante d'entrée (K1, K2) ;
- le dispositif de changement de vitesse (16) reste dans une position de changement de vitesse inchangée pour relier l'arbre d'entrée de boîte de vitesses (6) à l'arbre principal de boîte de vitesses (7) ;
- un dispositif de changement de vitesse (17) reste dans une position de changement de vitesse inchangée pour passer un premier rapport et un rapport de marche arrière de la boîte de vitesses principale (3) ; et
- un dispositif de changement de vitesse (18) reste dans une position de changement de vitesse inchangée pour changer de secteur dans la boîte de vitesses sectorisée (4).
